# EUROPÄISCHE PATENTSCHRIFT

(11) **EP 3 487 732 B1**
(45) Veröffentlichungstag und Bekanntmachung des Hinweises auf die Patenterteilung: **03.08.2022**
(21) Anmeldenummer: 17724341.7
(22) Anmeldetag: 16.05.2017
(51) Int. Cl.: B60T 8/172, B60T 8/1755, B60T 8/1763, B60T 8/1766

(54) **REIBWERTSCHÄTZER**
COEFFICIENT-OF-FRICTION ESTIMATOR
DISPOSITIF D'ÉVALUATION DE COEFFICIENT DE FROTTEMENT

(30) Priorität: 29.06.2016 DE 102016211728
(43) Veröffentlichungstag der Anmeldung: 29.05.2019
(73) Patentinhaber: ZF Friedrichshafen AG, 88046 Friedrichshafen (DE); ZF CV Systems Europe BV, 1170 Brussels (BE); TRW Automotive U.S. LLC, Livonia, MI 48150 (US)
(72) Erfinder: TENBROCK, Friedrich, 88085 Langenargen (DE); GOHL, Sven, 88090 Immenstaad (DE); SCHALL, Christoph, 88250 Weingarten (DE); WILLIAMS, Dan, Carmel, IN 46032 (US); KALLENBACH, Stephan, 30161 Hannover (DE); PLÄHN, Klaus, Seelze (DE); DIECKMANN, Thomas, 30982 Pattensen (DE); LÜLFING, Ralph-Carsten, 30826 Garbsen (DE)
(74) Vertreter: ZF Friedrichshafen AG
(86) Internationale Anmeldenummer: PCT/EP2017/061718
(87) Internationale Veröffentlichungsnummer: WO 2018/001618

(56) Entgegenhaltungen:
- EP-A1- 1 950 116
- EP-A1- 1 967 433
- EP-A2- 1 995 091
- US-A- 4 779 447
- US-A1- 2004 124 700
- US-A1- 2007 050 121
- US-A1- 2013 211 621

## Beschreibung

Die Erfindung betrifft ein Verfahren nach dem Oberbegriff von Anspruch 1 und ein Fahrzeug nach dem unabhängigen Vorrichtungsanspruch.

Verschiedene Fahrassistenzsysteme wie ABS (Anti Blockier System), ISC (Fahrdynamikregelung bzw. elektronische Stabilitätskontrolle), RSC (Runflat System Component), AEBS (Advanced Emergency Breaking System), AEB (Autonomos Emergency Breaking) oder Ausweichassistenten verwenden beim Start eine Schätzung eines zwischen den Rädern eines Fahrzeugs und einer Fahrbahn bestehenden Reibwerts. Die Bremspunkte eines AEBS-Systems werden etwa basierend auf der Annahme einer trockenen Straße mit hoher Griffigkeit geschätzt. Eine Anpassung an den tatsächlich vorliegenden Reibwert findet erst zur Laufzeit statt. Weicht die initiale Schätzung von dem tatsächlichen Reibwert ab, arbeiten die genannten Systeme nach dem Start nicht optimal.

US 4 779 447 A offenbart ein Verfahren zur Reibwertermittlung; wobei ein erstes Rad eines Fahrzeugs derart abgebremst wird, dass ein Schlupf zwischen dem ersten Rad einer Fahrbahn kleiner ist als ein Schlupf zwischen einem zweiten Rad des Fahrzeugs und der Fahrbahn ; wobei ein Reibwert zwischen dem ersten Rad und der Fahrbahn anhand des Verhaltens des ersten Rads während des Abbremsens ermittelt wird.

Der Erfindung liegt die Aufgabe zugrunde, die den aus dem Stand der Technik bekannten Lösungen innewohnenden Unzulänglichkeiten und Nachteile zu umgehen. Insbesondere soll die Ermittlung eines Reibwerts zwischen den Rädern eines Fahrzeugs und einer Fahrbahn zuverlässiger gestaltet und beschleunigt werden.

Diese Aufgabe wird gelöst durch ein Verfahren zur Reibwertermittlung nach Anspruch 1 und ein Fahrzeug nach Anspruch 14.

Bevorzugte Weiterbildungen sind in den Unteransprüchen enthalten.

Ein Reibwert, auch Reibungskoeffizient genannt, ist definiert als ein Quotient aus einer maximalen Reibungskraft und einer Anpresskraft zwischen zwei Körpern. Die Anpresskraft bewirkt, dass zwei Reibflächen jeweils eines der Körper aufeinander gepresst werden. Die Reibflächen berühren sich in zwei Berührflächen. Jede der Berührflächen entspricht einer Reibfläche oder ist eine Teilfläche einer Reibfläche. Die Anpresskraft verläuft orthogonal zu den Berührflächen. Bei der Reibungskraft handelt es sich um eine Kraft, welche die Reibfläche in ihren Berührflächen durch Reibung einer Verschiebung orthogonal zu der Anpresskraft entgegen setzen. Die maximale Reibungskraft bezeichnet eine Reibungskraft, die bei gegebener Anpresskraft maximal aufgebracht werden kann.

Das erfindungsgemäße Verfahren sieht vor, dass ein erstes Rad eines Fahrzeugs derart abgebremst wird, dass ein Schlupf zwischen dem ersten Rad und einer Fahrbahn kleiner ist als ein Schlupf zwischen einem zweiten Rad des Fahrzeugs und der Fahrbahn. Das Abbremsen des ersten Rads impliziert, dass der Schlupf zwischen dem ersten Rad und der Fahrbahn kleiner als Null ist. Der Schlupf zwischen dem zweiten Rad und der Fahrbahn kann ebenso kleiner als Null sein. Dies bedeutet, dass auch das zweite Rad abgebremst wird. Alternativ kann sich das zweite Rad frei drehen. In diesem Fall ist kein Schlupf vorhanden. Auch ist eine Beschleunigung des zweiten Rads, während das erste Rad abgebremst wird, möglich. Dies bedeutet, dass der Schlupf zwischen dem zweiten Rad und der Fahrbahn größer als Null ist.

Bei der Fahrbahn handelt es sich um einen Untergrund, auf dem das Fahrzeug steht oder fährt. Insbesondere stehen das erste Rad und das zweite Rad in Kontakt zu dem Untergrund. Dabei werden das erste Rad und das zweite Rad jeweils mit einem Teil des Fahrzeuggewichts belastet.

Erfindungsgemäß wird ein Reibwert zwischen dem ersten Rad und der Fahrbahn anhand des Verhaltens des ersten Rads während des Abbremsens ermittelt. Das Verfahren sieht also vor, das erste Rad so stark abzubremsen, dass sein Schlupf größer ist als der Schlupf des zweiten Rads. Aufgrund des stärkeren Schlupfs des ersten Rads lassen sich anhand des ersten Rads Rückschlüsse auf den Reibwert zwischen dem ersten Rad und der Fahrbahn ziehen. Insbesondere kann der Reibwert anhand mindestens einer physikalischen Größe, die das Verhalten des ersten Rads während des Abbremsens beschreibt, ermittelt werden.

Das erfindungsgemäße Verfahren zeichnet sich dadurch aus, dass bei geringer Verzögerung des Fahrzeugs ein einzelnes Rad in einen Zustand versetzt werden kann, in dem starker Schlupf auftritt. So tritt an dem ersten Rad starker Schlupf auf. Da aber das zweite Rad weniger stark abgebremst wird, frei dreht oder sogar beschleunigt wird, lässt sich eine zu starke Verzögerung des Fahrzeugs vermeiden.

In einer bevorzugten Weiterbildung wird der zwischen dem ersten Rad und der Fahrbahn ermittelte Reibwert als Schätzwert für einen Reibwert zwischen dem zweiten Rad und der Fahrbahn verwendet. Dem liegt die Annahme einer homogenen Griffigkeit sowohl der einzelnen Räder des Fahrzeugs als auch der Fahrbahn zugrunde. Insbesondere wird angenommen, dass der Reibwert zwischen dem zweiten Rad und der Fahrbahn dem Reibwert zwischen dem ersten Rad und der Fahrbahn entspricht.

Das der Erfindung zugrunde liegende Prinzip einer starken Abbremsung eines einzelnen Rads bei geringer Verzögerung des Fahrzeugs kommt besser zum Tragen, je geringer das abgebremste Rad belastet ist. In einer besonders bevorzugten Weiterbildung wird daher ein Rad des Fahrzeugs abgebremst, dass mit einer besonders geringen dynamischen Radlast beaufschlagt ist. Weiterbildungsgemäß wird also das erste Rad und das zweite Rad so gewählt, dass das erste Rad während des Abbremsens mit einer geringeren Radlast beaufschlagt wird als das zweite Rad.

Gewöhnlich nimmt die dynamische Radlast beim Bremsen von hinten nach vorne zu.

In einer darüber bevorzugten Weiterbildung ist daher das erste Rad in Fahrtrichtung weiter hinten angeordnet als das zweite Rad. Insbesondere kann es sich bei dem ersten Rad um ein Hinterrad handeln und bei dem zweiten Rad um ein Vorderrad.

Der maximale Reibwert zeigt sich am Übergang von Haft- zu Gleitreibung. Entsprechend wird das erste Rad erfindungsgemäß so stark abgebremst, dass es wenigstens zeitweise blockiert, dass also der Schlupf zwischen dem ersten Rad und der Fahrbahn mindestens zeitweise -1 beträgt. Während das erste Rad blockiert ist, dreht sich das zweite Rad weiter.

Das oben beschriebene Verhältnis des Schlupfs zwischen dem ersten Rad und der Fahrbahn und des Schlupfs zwischen dem zweiten Rad und der Fahrbahn gilt in einer darüber hinaus bevorzugten Weiterbildung kontinuierlich während des gesamten Abbremsvorgangs. Während also das erste Rad des Fahrzeugs abgebremst wird, ist der Schlupf zwischen dem ersten Rad und der Fahrbahn vorzugsweise kontinuierlich kleiner als der Schlupf zwischen dem zweiten Rad und der Fahrbahn.

Eine quantitative bestimmbare Eigenschaft eines physikalischen bzw. technischen Objekts wird als eine physikalische Größe bezeichnet. Zu den physikalischen Größen, die das Verhalten des ersten Rads während des Abbremsens beeinflussen, zählen der Schlupf zwischen dem ersten Rad und der Fahrbahn, ein an dem ersten Rad anliegender Bremsdruck und die während des Bremsens auf das erste Rad einwirkende Radlast. Von dem an dem ersten Rad anliegenden Bremsdruck hängt eineindeutig die Höhe eines auf das erste Rad wirkenden Bremsmoments ab. In einer bevorzugten Weiterbildung werden eine oder mehrere der genannten Größen zur Ermittlung des Reibwerts zwischen dem ersten Rad und der Fahrbahn herangezogen.

Das oben beschriebene Verfahren eignet sich besonders zum Kalibrieren eines Bremssystems. Ein entsprechendes Verfahren zum Abbremsen eines Fahrzeugs umfasst einen ersten Schritt und einen zweiten Schritt. In dem ersten Schritt wird ein Reibwert unter Anwendung des erfindungsgemäßen Verfahrens oder einer bevorzugten Weiterbildung dieses Verfahrens ermittelt. In dem zweiten Schritt wird eine Gefahrenbremsung, auch Notbremsung oder Vollbremsung genannt, durchgeführt. Dieses zeichnet sich durch eine möglichst hohe Verzögerung des Fahrzeugs aus. Bevorzugt wird das Fahrzeug bei der Gefahrenbremsung mit einer maximal möglichen Verzögerung abgebremst.

Der zweite Schritt wird nach dem ersten Schritt ausgeführt. Dabei wird der in dem ersten Schritt ermittelte Reibwert verwendet, um das Bremssystem des Fahrzeugs zu kalibrieren. Bereits zu Beginn der Gefahrenbremsung liegt somit ein Reibwert vor, der den zwischen den Rädern des Fahrzeugs und der Fahrbahn tatsächlich herrschenden physikalischen Gegebenheiten entspricht.

Der erste Schritt, d.h. das erfindungsgemäße Verfahren oder eine bevorzugte Weiterbildung dieses Verfahrens wird in einer bevorzugten Weiterbildung zum Abbremsen des Fahrzeugs automatisiert ausgeführt. Die automatisierte Ausführung kann etwa zur Vorbereitung einer Gefahrenbremsung ausgeführt werden, wenn das Fahrzeug eine drohende Kollision mit einem Hindernis erkennt.

In einer darüber hinaus bevorzugten Weiterbildung wird auch der zweite Schritt automatisiert ausgeführt. Eine derartige Weiterbildung entspricht der Funktionalität eines Notbremsassistenten.

Bei einer Gefahrenbremsung durch einen Notbremsassistenten wird üblicherweise der Fahrer vorab gewarnt. Eine entsprechende Warnung kann etwa in Form einer sogenannten Warnbremsung erfolgen. Bei einer Warnbremsung wird das Fahrzeug mit einer geringfügigen Verzögerung, etwa mit einer Verzögerung von nicht mehr als 3,5 m/s² abgebremst. Dies soll dem Fahrer eine bevorstehende Gefahrenbremsung signalisieren. Die Warnbremsung wird in einer bevorzugten Weiterbildung unter Ausführung des erfindungsgemäßen Verfahrens oder einer Weiterbildung dieses Verfahrens ausgeführt.

Das Fahrzeug weist bevorzugt mindestens ein Steuergerät auf, das ausgebildet ist, das erfindungsgemäße Verfahren oder eine Weiterbildung dieses Verfahrens, insbesondere zur Vorbereitung einer Gefahrenbremsung und in Kombination mit einem Notbremsassistenten auszuführen.

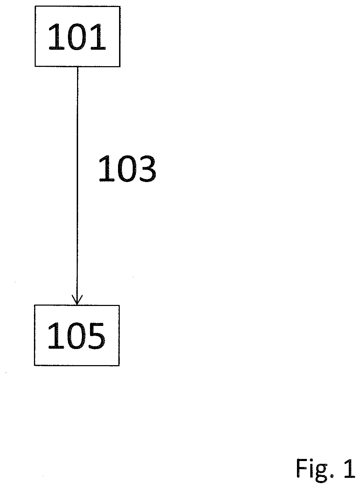

Ein bevorzugtes Ausführungsbeispiel der Erfindung ist in Fig. 1 dargestellt. Im Einzelnen zeigt:
Fig. 1 einen Notbremsassistenten

Gemäß Fig. 1 wird zunächst ein Reibwertschätzer ausgeführt. Dieser ermittelt durch gezieltes Blockieren eines gering belasteten Rads einen Reibwert 103 zwischen dem Rad und einer Fahrbahnoberfläche.

Der Reibwert 103 wird einem nachfolgend ausgeführten Notbremsassistenten 105 als Eingabeparameter übergeben.

### Bezugszeichen

- 101: Reibwertschätzer
- 103: Reibwert
- 105: Notbremsassistent

## Patentansprüche

1. Verfahren zur Reibwertermittlung; wobei
ein erstes Rad eines Fahrzeugs derart abgebremst wird, dass ein Schlupf zwischen dem ersten Rad und einer Fahrbahn kleiner ist als ein Schlupf zwischen einem zweiten Rad des Fahrzeugs und der Fahrbahn; und wobei
ein Reibwert (103) zwischen dem ersten Rad und der Fahrbahn anhand des Verhaltens des ersten Rads während des Abbremsens ermittelt wird, **dadurch gekennzeichnet, dass**
das erste Rad derart abgebremst wird, dass es wenigstens zeitweise blockiert.

2. Verfahren nach Anspruch 1; **dadurch gekennzeichnet, dass**
der Reibwert (103) zwischen dem ersten Rad und der Fahrbahn als Schätzwert für einen Reibwert (103) zwischen dem zweiten Rad und der Fahrbahn verwendet wird,

3. Verfahren nach einem der vorhergehenden Ansprüche; **dadurch gekennzeichnet, dass**
das erste Rad während des Abbremsens mit einer geringeren Radlast beaufschlagt wird als das zweite Rad.

4. Verfahren nach dem vorherigen Anspruch; **dadurch gekennzeichnet, dass**
das erste Rad in Fahrtrichtung des Fahrzeugs weiter hinten angeordnet ist als das zweite Rad.

5. Verfahren nach einem der vorhergehenden Ansprüche; **dadurch gekennzeichnet, dass**
der Schlupf zwischen dem ersten Rad und der Fahrbahn während des Abbremsens kontinuierlich kleiner ist als der Schlupf zwischen dem zweiten Rad und der Fahrbahn.

6. Verfahren nach einem der vorhergehenden Ansprüche; **dadurch gekennzeichnet, dass**
zur Ermittlung des Reibwerts (103) zwischen dem ersten Rad und der Fahrbahn der Schlupf zwischen dem ersten Rad und der Fahrbahn, ein an dem ersten Rad anliegender Bremsdruck und/oder die Radlast, mit der das erste Rad während des Abbremsens beaufschlagt ist, herangezogen werden.

7. Verfahren zum Abbremsen eines Fahrzeugs; wobei
in einem ersten Schritt ein Verfahren nach einem der vorhergehenden Ansprüche ausgeführt wird; wobei
in einem zweiten Schritt eine Gefahrenbremsung durchgeführt wird.

8. Verfahren nach dem vorhergehenden Anspruch; **dadurch gekennzeichnet, dass** der Reibwert (103) zwischen dem ersten Rad und der Fahrbahn und/oder der Reibwert (103) zwischen dem zweiten Rad und der Fahrbahn zur Steuerung oder Regelung der Gefahrenbremsung verwendet wird.

9. Verfahren nach dem vorhergehenden Anspruch; **dadurch gekennzeichnet, dass** der erste Schritt automatisiert ausgeführt wird.

10. Verfahren nach einem der vorhergehenden zwei Ansprüche; **dadurch gekennzeichnet, dass**
der zweite Schritt automatisiert durchgeführt wird.

11. Verfahren nach einem der Ansprüche 7 bis 10; **dadurch gekennzeichnet, dass** das Fahrzeug im ersten Schritt abgebremst wird.

12. Verfahren nach dem vorhergehenden Anspruch; **dadurch gekennzeichnet, dass** das Fahrzeug im ersten Schritt mit einer geringeren Verzögerung als im zweiten Schritt abgebremst wird.

13. Verfahren nach einem der vorhergehenden zwei Ansprüche; **dadurch gekennzeichnet, dass**
die Verzögerung des Fahrzeugs im ersten Schritt nicht mehr als 3,5 m/s² beträgt.

14. Fahrzeug mit mindestens einem Steuergerät; wobei
das Steuergerät ausgebildet ist, ein Verfahren nach einem der vorhergehenden Ansprüche auszuführen.

## Claims

1. Method for friction coefficient determination; wherein a first wheel of a vehicle is braked such that a degree of slip between the first wheel of the vehicle and a roadway is less than a degree of slip between a second wheel of the vehicle and the roadway; and wherein
a friction coefficient (103) between the first wheel and the roadway is determined on the basis of the behaviour of the first wheel during the braking operation, **characterized in that**
the first wheel is braked such that it at least intermittently locks.

2. Method according to Claim 1; **characterized in that** the friction coefficient (103) between the first wheel and the roadway is used as an estimated value for a friction coefficient (103) between the second wheel and the roadway.

3. Method according to either one of the preceding claims; **characterized in that**,
during the braking operation, the first wheel is acted on with a lower wheel load than the second wheel.

4. Method according to the preceding claim; **characterized in that**
the first wheel is arranged further to the rear in a direction of travel of the vehicle than the second wheel.

5. Method according to any one of the preceding claims; **characterized in that**,
during the braking operation, the degree of slip between the first wheel and the roadway is continuously lower than the degree of slip between the second wheel and the roadway.

6. Method according to any one of the preceding claims; **characterized in that**
the degree of slip between the first wheel and the roadway, a brake pressure prevailing at the first wheel, and/or the wheel load with which the first wheel is acted on during the braking operation, are taken into consideration for the determination of the friction coefficient (103) between the first wheel and the roadway.

7. Method for braking a vehicle; wherein,
in a first step, a method according to any one of the preceding claims is executed; wherein,
in a second step, an emergency braking operation is performed.

8. Method according to the preceding claim; **characterized in that**
the friction coefficient (103) between the first wheel and the roadway and/or the friction coefficient (103) between the second wheel and the roadway is used for the open-loop or closed-loop control of the emergency braking operation.

9. Method according to the preceding claim; **characterized in that**
the first step is executed in automated fashion.

10. Method according to either one of the preceding two claims; **characterized in that**
the second step is executed in automated fashion.

11. Method according to any one of Claims 7 to 10; **characterized in that**,
in the first step, the vehicle is braked.

12. Method according to the preceding claim; **characterized in that**
the vehicle is braked with a lesser deceleration in the first step than in the second step.

13. Method according to either one of the preceding two claims; **characterized in that**,
in the first step, the deceleration of the vehicle is no more than 3.5 m/s².

14. Vehicle having at least one control unit; wherein
the control unit is configured to carry out a method according to any one of the preceding claims.

## Revendications

1. Procédé de détermination du coefficient de frottement,
une première roue d'un véhicule étant freinée de manière à ce qu'un glissement entre la première roue du véhicule et une chaussée soit inférieur à un glissement entre une deuxième roue du véhicule et la chaussée, et un coefficient de frottement (103) entre la première roue et la chaussée étant déterminé sur la base du comportement de la première roue lors du freinage, **caractérisé en ce que**
la première roue est freinée de manière à se bloquer au moins temporairement.

2. Procédé selon la revendication 1, **caractérisé en ce que**
le coefficient de frottement (103) entre la première roue et la chaussée est utilisé comme valeur estimée d'un coefficient de frottement (103) entre la deuxième roue et la chaussée.

3. Procédé selon l'une des revendications précédentes, **caractérisé en ce que**
la première roue est soumise lors du freinage à une charge de roue plus faible que celle de la deuxième roue.

4. Procédé selon la revendication précédente, **caractérisé en ce que**
la première roue est disposée plus en arrière dans le sens de la marche du véhicule que la deuxième roue.

5. Procédé selon l'une des revendications précédentes, **caractérisé en ce que**
le glissement entre la première roue et la chaussée lors du freinage est continuellement inférieur au glissement entre la deuxième roue et la chaussée.

6. Procédé selon l'une des revendications précédentes, **caractérisé en ce que**
le glissement entre la première roue et la chaussée, une pression de freinage appliquée à la première roue et/ou la charge de roue appliquée à la première roue pendant le freinage, sont utilisés pour déterminer le coefficient de frottement (103) entre la première roue et la chaussée.

7. Procédé de freinage d'un véhicule,
un procédé selon l'une des revendications précédentes étant mis en œuvre dans une première étape,
le freinage d'urgence étant effectué dans une deuxième étape.

8. Procédé selon la revendication précédente, **caractérisé en ce que** le coefficient de frottement (103) entre la première roue et la chaussée et/ou le coefficient de frottement (103) entre la deuxième roue et la chaussée sont utilisés pour commander ou réguler le freinage d'urgence.

9. Procédé selon la revendication précédente, **caractérisé en ce que** la première étape est effectuée automatiquement.

10. Procédé selon l'une des deux revendications précédentes, **caractérisé en ce que** la deuxième étape est effectuée automatiquement.

11. Procédé selon l'une des revendications 7 à 10, **caractérisé en ce que** le véhicule est freiné à la première étape.

12. Procédé selon la revendication précédente, **caractérisé en ce que** le véhicule est freiné à la première étape avec une décélération plus faible qu'à la deuxième étape.

13. Procédé selon l'une des deux revendications précédentes, **caractérisé en ce que** la décélération du véhicule à la première étape n'est pas supérieure à 3,5 m/s².

14. Véhicule comprenant au moins une unité de commande,
l'unité de commande étant conçue pour mettre en œuvre un procédé selon l'une des revendications précédentes.
